# EUROPEAN PATENT SPECIFICATION

(11) **EP 1 676 736 B1**
(45) Date of publication and mention of the grant of the patent: **30.09.2009**
(21) Application number: 04381047.2
(22) Date of filing: 30.12.2004
(51) Int. Cl.: B60J 7/00

(54) **Sunshade for vehicle roofs having a transparent element**
Sonnenschutz für Fahrzeugdach mit durchsichtigem Element
Store de protection solaire pour toit de véhicule avec un élément transparent

(43) Date of publication of application: 05.07.2006
(73) Proprietor: GRUPO ANTOLIN-INGENIERIA, S.A., 09007 Burgos (ES)
(72) Inventor: Sardonil Santamaria, Juan Carlos, 09001 Burgos (ES); Marcos Gonzalez, Cesar, 09002 Burgos (ES)
(74) Representative: Capitan Garcia, Maria Nuria

(56) References cited:
- DE-A1- 4 037 322
- DE-A1- 10 019 644
- DE-A1- 10 240 582
- DE-U1-202004 001 125
- US-A- 5 893 603

## Description

### OBJECT OF THE INVENTION

The present invention relates to a sunshade for vehicle roofs that include a transparent element.

The object of this invention is the construction of a sunshade or protection means for roofs with transparent elements of large dimensions for vehicles using a flexible laminar element.

This invention is characterised by the device maintaining the longitudinal and transverse tension in the laminar element as it is deployed and stowed. This prevents formation of wrinkles in said element which give it an unsightly appearance.

### BACKGROUND OF THE INVENTION

Known in the state of the art are flexible elements meant to cover the inside of vehicle roofs when these roofs incorporate transparent elements to provide greater comfort to the occupants.

It is possible to find flexible elements of a laminar type, such as curtains, in which their ends are guided by rails. It is also common to find intermediate bows joined to the curtain which assume the curvature of the vehicle roof so that the curtain surface adapts to the shape of the roof.

One example is US Patent 6,161,893 which relates to a curtain for an automobile roof. The curtain has a plurality of flexible bows attached to it. The bows and the curtain roll up together so that the bows remain extended with the curtain when stowed in its housing. When the curtain is deployed, the bows are guided by rails that narrow to reduce to distance between their ends by a step and force a slight curvature of the flexible bars to conform to the shape of the roof.

Patent JP63258213 also relates to a curtain for covering automobile roofs. The curtain is wound together with flexible bows that remain extended when the curtain is stowed. Although the configuration of its components is different, the curtain is deployed and the bows are curved as they are guided by paths that constantly maintain a distance to each other shorter than the length of the bows. In this document the bows are also attached to the curtain.

Patent EP1127722 describes in one of its examples a curtain for vehicle roofs that consists of several layers of a flexible material. These layers have different lengths and overlap one another starting from the same end. The layers are sewn together to form closed bags. A flexible rod is housed inside each bag. These rods are not attached to the curtain at a fixed position; instead, they may move inside each bag. When the curtain is stowed all the rods are collected towards the same point. The stowed curtain occupies a considerable space because of the layers that form the curtain. As the curtain is deployed, the rods are again placed on the anterior ends, in the sense in which the curtain unfolds, of each bag, and are thus carried to their final position resulting in their even distribution.

One of the drawbacks presented by these devices is that they use a great amount of material, such as in the case of curtains with closed bags. This also means a greater weight to be carried and more space occupied, as well as a greater number of operations required to form the closed bags.

Another drawback is that when the surface to cover is large, wrinkles are formed in the curtain due to the lack of a transverse tension to prevent their formation.

The present invention solves the aforementioned drawbacks with a sunshade according to claim 1. Further developments of the invention are the subject-matter of the dependent claims. A sunshade is described that maintains a constant longitudinal and transverse tension in the curtain throughout the stowing and deployment operations, thereby preventing the formation of unsightly wrinkles. It also allows reducing the storage space required for the curtain and its cost, by reducing the amount of material and the number of operations required to form the curtain.

It is known from the State of the art some sunshade for vehicle roofs as the one disclosed in US 5893603 according to the preamble of claim 1, where is disclosed a roof liner having a flexible lining material with extends both longitudinally and transversally across the vehicle. Being also provided with a plurality of bows extend across the lining material at spaced intervals from the front to the rear, uniformly spaced distances. The system uses guide elements which engage alternate pairs of bows providing a tension panel between the two bows engaged by the guide element and an untensioned panel between two guide elements. There is also a respective guide rail at the side of the roof receives each of the guide elements for sliding therealong. This sunshade implies some drawbacks as it does not ensure tension in the lining both in transverse and longitudinal direction. So the aim of the present invention is to overcome these inconveniences designing a sunshade for vehicle roofs which is provided with the need means for ensuring the tension in order to avoid the formation of wrinkles in said elements it is deployed and stowed.

### DESCRIPTION OF THE INVENTION

The present invention consists of a sunshade device for vehicle roofs that includes a transparent element by means of a flexible laminar element that can be adjusted in several positions.

Thanks to the new materials, it is increasingly common to find roofs made of a transparent material with sizes much larger than those used hitherto. There is a current trend to make the transparent area span almost all of the surface of the roof. This provides a greater view of the external surroundings and thus a communication with the environment.

In turn, using large transparent roofs implies that sunlight falls directly on the vehicle occupants. Therefore, the transparent segment must be covered so that the degree of shading can be adjusted to improve the comfort inside the passenger space.

Sunshade methods have been designed that allow adjusting the concealment of the transparent roof area mainly for areas that are not so large, where it is not necessary to apply a transverse tension to prevent the appearance of wrinkles in the laminar element as the curvature of a vehicle roof is large enough to make these areas approximately straight, lacking curvature. As a greater area of the transparent element is provided the curvature in a longitudinal sense and in a transverse sense with respect to the vehicle affect the curvature of the transparent segment, and thus that of the sunshade system adapted to this segment. The flexible element of the sunshade system is wrinkled as it adapts to these curvatures and by tensions in both directions, longitudinal and transverse, as it adapts to these curvatures along its extension.

This device ensures a minimum longitudinal and transverse tension in the entire laminar element during the deployment and stowing operations. It thereby prevents the appearance of wrinkles, providing a more pleasant appearance of the surface obtained on the curtain.

This sunshade device comprises a flexible material, such as in the constructions with a curtain, which performs the sunshade function as such. In addition, a front slat and intermediate slats provide stiffness to the curtain. These slats are guided in rails along which slide runners that are attached to either side of each slat.

With this device the intermediate stiffening slats are separable, so that when the curtain is stowed the slats are provisionally collected near the roll, being joined to the curtain as the latter is deployed. When the curtain is stowed the slats are again separated, resulting in a very compact configuration. In addition, a minimum longitudinal and transverse tension is maintained during deployment and stowing to prevent formation of wrinkles.

The object of the invention mainly consists of the set of technical solutions that work together to obtain this mode of operation.

To this end, the curtain incorporates open bags meant to collect and house the intermediate slats as the curtain advances when it is deployed. The intermediate slats have wedge shaped ends that contribute to ensuring the lateral tension in the curtain.

In addition, the bags are provided on their open side with flexible lips that facilitate connection to the corresponding intermediate slat by having a curvature tending to keep the bag open. These lips encompass a minimum length on the entire side of the bag to save material. The flexibility of the lips allows them to be rolled and extended with the rest of the curtain, occupying a minimal space.

So that each bag engages its corresponding intermediate slat, different configurations are used for the lips as regards their dimensions or their spatial arrangement. These lips act together with a part which we will call the selector, which allows each bag to receive its associated slat. In this way, the first bag receives the first intermediate slat, the one that must exit, and not the first slat found when the curtain is deployed.

To prevent the formation of wrinkles in the curtain it is necessary to ensure a minimum transverse and longitudinal tension in the curtain as it is stowed and deployed.

The transverse tension is obtained by the wedge-shaped profile of the slat ends, which rest on the base of the bags which have a union to the curtain having the same configuration as the wedge shape of the ends of the intermediate slats.

Some of the intermediate slats, such as the one nearest the reel, can have a straight profile, i.e. without a wedge-shaped profile on their ends.

This system prevents the appearance of wrinkles even in large curtains. It also provides great savings of material and a minimum weight, as the open bags have the minimum size required to house the slats, thereby also providing savings of space when the curtain is stowed.

The longitudinal tension is ensured during deployment by the tension of the reel plus that of the intermediate slats when they rest on the base of the bag opposing the traction of the leading driving slat.

Lastly, the longitudinal tension in the curtain is ensured during its stowing by maintaining a constant distance between consecutive slats. A plate is used for this purpose that is attached to the runners and locks in the runner of an adjacent slat.

When the rear intermediate slat arrives at the winding area, the union between this slat and the adjacent one must be eliminated to complete the stowing of the curtain. To do so, the end of the plate locked in the runner is extracted by a profile that pushes a pivot of the plate, lifting it and thereby releasing the runner and the slat.

After the slats are released from the unions to one another that keep them at a constant distance, the curtain can be rolled and the slats are separated from the curtain.

### DESCRIPTION OF THE DRAWINGS

The present descriptive memory is completed by a set of drawings that illustrate the preferred example and in no case limit the invention.

Figure 1 shows a schematic general perspective view of the main parts of the sunshade device, without showing the longitudinal tension system.

Figure 2 shows a sectional view of a sequence of the operation of the selector together with the bag lips.

Figure 3 shows the curtain deployed with the first bag with curved lips and the second bag with straight lips that have received their corresponding intermediate slats.

Figure 4 shows an enlarged view of the system that ensures the longitudinal tension as the curtain is stowed and a sequence of the plate as it is released from its housing in the runner.

Figure 5 shows a second embodiment for the sunshade device in which the curved lips of the first bar and the straight lips of the second pass through the selector; this is shown in the top and bottom insets of this figure respectively.

Figure 6 shows two details of the ends of the slats in contact with the base of the bags. The first detail corresponds to a bag with curved lips and the second to a bag with straight lips.

### DETAILED DESCRIPTION OF SEVERAL EMBODIMENTS OF THE INVENTION

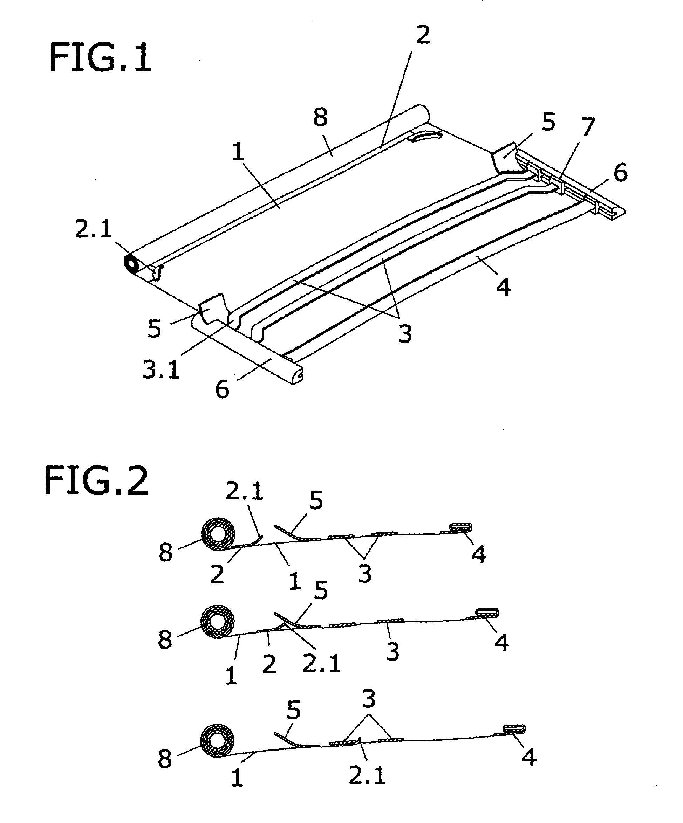

Figure 1 shows a schematic perspective view of the main elements of the sunshade device for a vehicle roof.

This device allows adjusting the concealment of the transparent area of the vehicle roof. It maintains a minimum longitudinal and transverse tension in the curtain (1) during its stowing and deployment.

Figure 1 shows the curtain (1) when it begins to unfold. The curtain (1) extends along the vehicle roof sliding along lateral rails (6) placed on either side that run longitudinally along the inner surface of the vehicle roof by means of runners (7). The rails (6) support and guide the sunshade.

Figure 1 allows to distinguish the main elements of the sunshade device:
- The curtain (1) or flexible laminar element that performs the sunshade function covering the transparent area of the vehicle roof.
- Bags (2) with open front ends meant to house intermediate slats (3).
- Several intermediate slats (3). This example uses only two slats. They have a wedge-shaped profile (3.1) that together with the seams (2.2) of the bags (2) in an oblique disposition ensure a transverse tension in the curtain (1). They also stiffen the flexible sheet (1).
- A leading drive slat (4). It is joined to the free front end of the curtain (1). These stiffen the flexible material (1) and receive the traction force when the device is deployed and stowed.
- Lateral rails (6). They act as supports and guides for the sunshade device.
- Runners (7) provided on the ends of each slat (3, 4) that slide on the rails (6).
- A reel (8) on which the curtain (1) is stored when it is stowed. It is located on the rear area of the roof.
- A selector (5) that connects each bag (2) to its corresponding slat (3).
- Flexible lips (2.1) placed on the open end of the bag (2). In addition to being flexible, they tend to be curved so that they raise the mouth of the bag (2). They are used to allow each bag (2) to receive the corresponding intermediate slat (3). (The various configurations of the bag lips will be described further below; they may be straight or curved and be placed in different positions with respect to the central axis of the curtain).

As shown in figure 1, the curtain (1) is in a position in which it is starting to be deployed. With this device the extent of concealment of the roof can be adjusted and the formation of wrinkles in the curtain (1) is prevented, maintaining a longitudinal and transverse tension in said curtain (1) at all times as described below.

The curtain (1), with its bags (2) and corresponding flexible lips (2.1), is stored in a reel (8) when stowed, occupying a minimal space.

In this embodiment the first bag (2) to leave the reel (8) has curved lips (2.1) and is about to pass by the selector (5) that pushes them against the curtain (1).

When the curtain (1) is deployed, the leading drive slat (4) advances sliding its runners (7) along the two side rails (6). The intermediate slats (3) are in turn collected by the corresponding bags (2), sewn in the curtain (1), and also advance along the aforementioned rails (6) by sliding on their runners (7). The slats (3, 4) provide stiffness to the curtain (1) as explained below, and allow maintaining a minimum transverse tension while the curtain (1) is deployed and stowed.

The slats (3, 4) have a slight curvature, which they impose on the curtain (1) which therefore hugs the roof.

To deploy the curtain (1) correctly the intermediate slats (3) must be collected selectively. This is, each bag (2) must collect its corresponding slat (3). For this purpose a selector (5) is provided that allows performing this selection. The selector (5) is placed at the storage area of the slats (3, 4) at the outlet of the reel (8).

Figure 2 shows the joint action of the selector (5) and the lips (2.1) of the bag (2), so that the first bag (2) collects the first intermediate slat (3) that exits, not the first slat (3) it finds in its path as soon as the bag (2) leaves the reel (8). As shown in figures 1 and 2, the selector (5) and the second intermediate slat (3) are sufficiently close so that the curved lips (2.1) of the first bag (2) do not enter the first space present between the selector (5) and the second intermediate slat (3). In this way as the curtain (1) advances said lips (2.1) can reach the space between the second intermediate slat (3) and the first intermediate slat (3), where they are engaged allowing the first intermediate slat (3) to be placed inside the first bag (2).

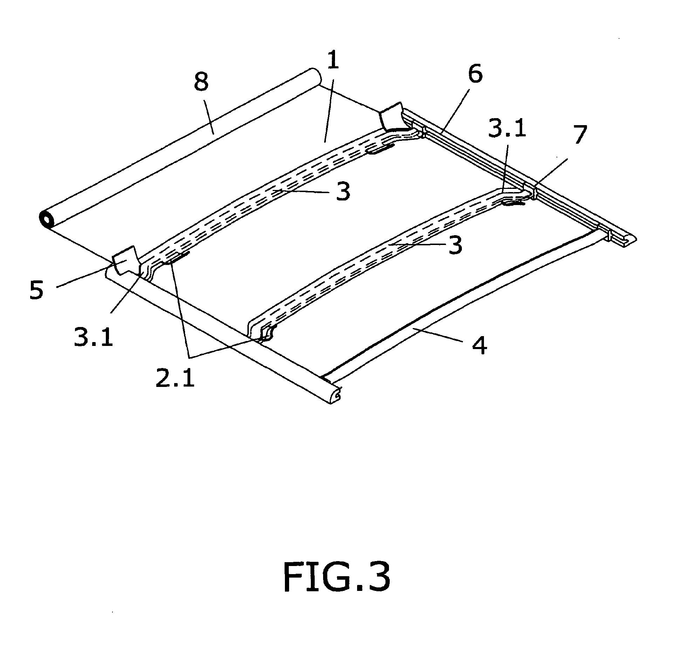

Figure 3 shows the curtain (1) deployed, with the two bags (2) having already collected the two intermediate slats (3). This figure shows the first bag (2) with curved lips (2.1) that have already passed by the selector (5), as shown also in figure 2, and the second bag (2) which has collected the second intermediate slat (3). The second bag (2) has straight lips (2.1) that are separated by a distance shorter than that formed by the two curved plates of the selector (5). With this configuration, the lips (2.1) of the second bag (2) do not pass the selector (5) and collect the second intermediate slat (3) without any impediment.

Therefore, this embodiment makes use of different lips (2.1), straight and curved, where the straight lips (2.1) are placed at a distance from each another with respect to the central axis of the curtain (1) so that they do not pass by the selector (5); only the curved lips (2.1) pass by the selector (5) and hug the curtain (1), then rising when the space between the slats (3) allows to collect the corresponding intermediate slat (3).

As can also be seen in this example, both slats (3) have a wedge-shaped profile (3.1) on their ends that helps to maintain a minimum constant transverse tension in the curtain (1) when touching the also wedge-shaped base (2.2) of the bags (2), as shown also in figure 3.

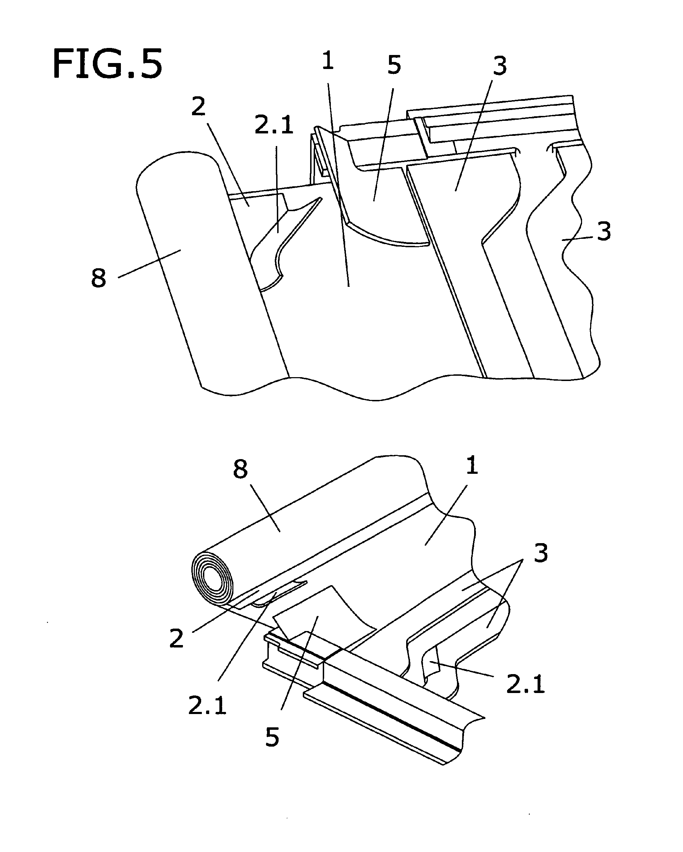

Another possible embodiment that allows the bag (2) to collect the corresponding intermediate slat (3) involves varying the position of the flexible lips (2.1), i.e. their separation from the central axis of the curtain (1), so that the lips of all bags pass by the selector to collect their corresponding slat (3). In this embodiment of the invention the profile that meets the base (2.2) of the bag (2) of the slat (3) that is collected by a bag (2) with straight lips (2.1) is also modified. In this case the slat (3) collected by a bag (2) with straight lips (2.1) also has a straight profile. This alternative embodiment is shown in figure 5.

The upper part of the figure shows an enlarged view of the selector (5) and the first bag (2) that will pass by it.

In this case the first bag (2) has curved lips (2.1) in correspondence with the curved configuration of the end of the first intermediate slat (3), which it must collect.

The second bag (2) has straight lips (2.1), as can be seen in the bottom part of figure 5, in correspondence with the straight side of the second slat (3) which it must collect.

In this embodiment all lips (2.1) of all bags (2) pass by the selector (5). It is also possible to have a configuration opposite to the one described, i.e. the first bag (2) can have straight lips (2.1) and the second bag (2) have curved lips (2.1), in correspondence with the straight and curved profiles of the first and second intermediate slats (3) which they respectively collect.

The bags (2) have two functions: on one hand they collect the slats (3), and on the other they help maintain the tension in the curtain (1), mainly the transverse tension. Similarly, the special configuration of the slats (3) not only stiffen the curtain (1) to give it the desired curvature, but also ensure its transverse tension.

To this end, the slats (3) have a wedge-shaped profile (3.1) that rests on the oblique seams (2.2) of the corresponding bag (2). As shown in figure 1, the seams (2.2) are also wedge shaped to ensure an optimum contact and thus a suitable transverse tension. This transverse tension is ensured both during the deployment and stowage of the curtain (1).

As also mentioned, some intermediate slats (3) can have a straight profile on the side that touches the base of the bag (2).

It should also be remarked that different geometries of the slats (3) are possible, as long as they maintain the wedge shape (3.1) that adapts to the base of the bag (2) and ensures the minimum transverse tension.

The front part of the bag (2) is open and its non-wedged sides are not attached to the bag (2). These free sides is where the flexible lips (2.1) are attached, which have a tendency to rise in order to facilitate the collection of the intermediate slat (3).

It is also necessary to guarantee a longitudinal tension, not only during the deployment of the curtain (1) but also during its stowing, by the means described below.

During the deployment, the curtain (1) maintains its longitudinal tension by the tension of the reel (8) aided by the tension in the intermediate slats (3) against the base of the bags (2), which are all opposite the traction of the leading drive slat (4).

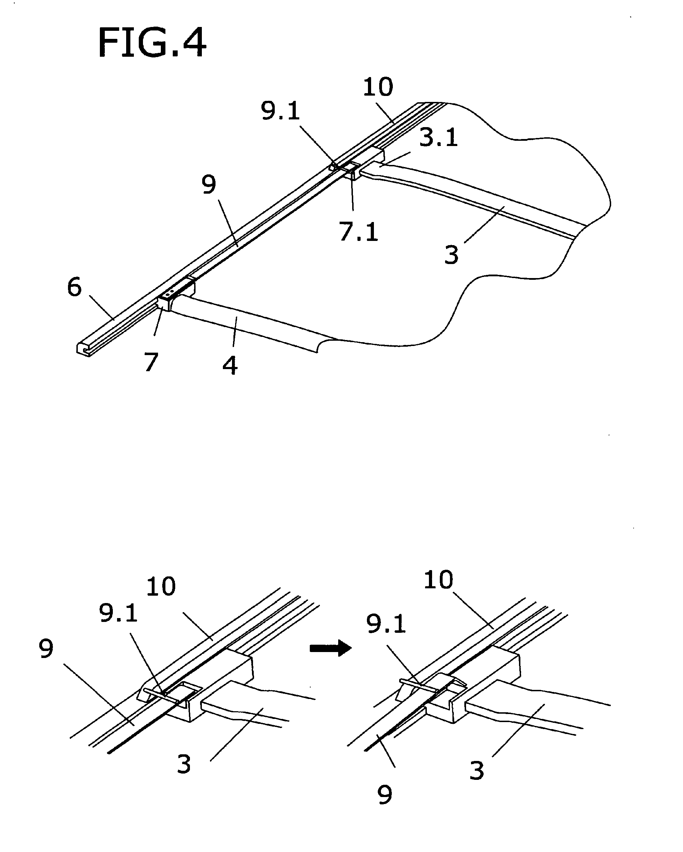

To ensure the longitudinal tension during stowing, the distance between the leading slat (4) and the adjacent intermediate slat (3) or between adjacent intermediate slats (3) is maintained. This is achieved by a flexible plate (9) as shown in figure 4.

The plate (9) is joined on its front end, in the sense of travel of the vehicle, to the runner (7) of the leading drive slat (4) (or intermediate slat (3), as applicable in each case). On its rear part the plate is provided with a pivot (9.1) and its rear end is curved to enter a housing (7.1) on the upper part of the runner (7) of the intermediate slat (3), placed behind the first slat. The plate (9) also has an elastic behaviour.

The plate (9), with the curtain (1) in an extended position, is attached to the front runner (7) and locked in the rear runner (7). This keeps the distance between the front slat (4) and the adjacent intermediate slat (3) (or between adjacent intermediate slats (3)) constant. This ensures a minimum longitudinal tension in the curtain (1), preventing the formation of wrinkles.

When the rear slat (3) arrives at the reel (8) to be stowed, the union between the adjacent slats (3, 4) must disappear to allow a complete folding of the curtain (1) and the separation of the slat (3) and the curtain (1). This is achieved by the pivot (9.1) resting on the top surface of the rails (6) and in its path while the curtain (1) is collected it eventually rests on the surface of a guide (10) with an upper plane. Said surface can be a profile (10) with a wedged end, as shown in figure 4.

This releases the rear runner (7) when the plate (9) is released from its housing (7.1) in said runner (7), allowing the rear slat (3) to be retained in the slat storage area near the reel (8). Consecutively, the leading drive slat (4) runs freely until its storage place, immediately in front of the rear slat (3).

It should also be remarked that an opposite configuration of the plate (9) is possible. The mode of operation would be identical, except that in this case the plate (9) is attached to the rear runner (7) and locked in the front runner. The only important change in this arrangement is the position of the profile (10), which must be displaced towards the front part.

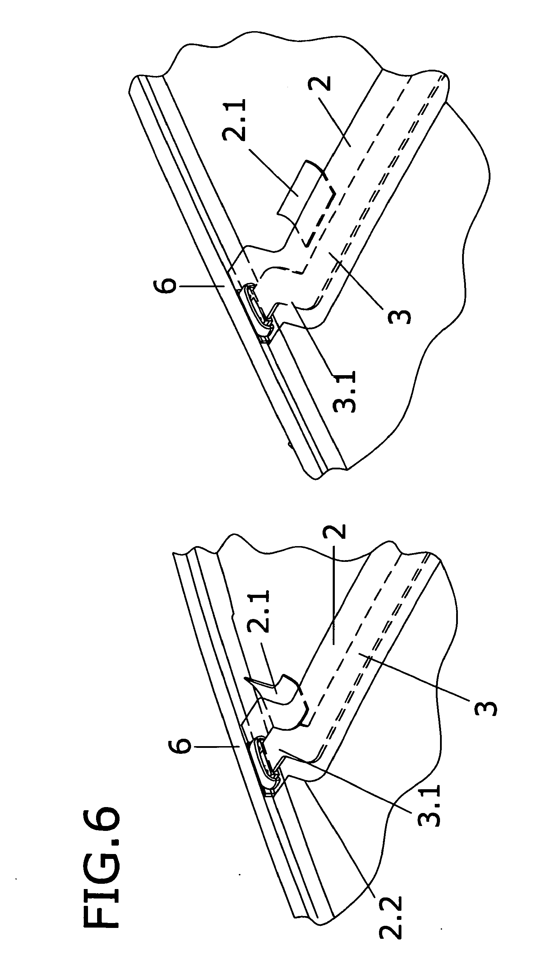

Figure 6 shows two enlarged details of the lips (2.1) of the bags (2) and the contact of the slats (3) with the base (2.2) of the bags (2).

The first enlarged detail of figure 6 shows the bag (2) with straight lips (2.1) placed on end positions of the bag (2) to provide the transverse tension required in the curtain (1) in order to prevent the formation of wrinkles by its joint action with the intermediate slat (3) it collects.

The two details show how the lips (2.1), straight and curved, extend slightly towards the inside of the bag (2) (broken line) as this area of the lip (2.1) acts as a support of the lip (2.1) to allow it to curve and tend to lift the open end of the bag (2) to allow collecting the slat (3).

In the second detail of figure 6 the lips (2.1) of the bags (2) are straight are less separated from the central axis of the curtain (1) compared to the aforementioned curved lips (2.1). These lips (2.1) correspond to the previously described lips (2.1) that have not passed by the selector (5) and that correspond to the second embodiment described.

As regards materials, the curtain (1) is preferably made of a textile fabric, although it can also be made of plastic or a combination of these materials.

The slats (3, 4) are made of a sufficiently stiff material; they may be made of metal or plastic, for example.

As regards the union of the bags (2) to the curtain (1), they may be sewn or joined by other means ensuring the union, such as by an adhesive.

The essence of this invention is not affected by variations in the materials, shape, size and arrangement of its component elements, described in a non-limiting manner that should allow its reproduction by an expert in the field.

## Claims

1. Sunshade for vehicle roofs having a transparent element, comprising a curtain (1) that is wound on a reel (8) placed on the rear of the roof, a leading drive slat (4) and at least one intermediate slat (3) for providing stiffness to the curtain (1), which slide by runners (7) along lateral rails (6) placed on either side and extending longitudinally along the entire length of the vehicle roof, wherein the sunshade is provided with longitudinal tensioning means, said curtain (1) has some bags (2) open on their front side for receiving the intermediate slats (3) in the deployment operation of the curtain (1) **characterized in that,**
- the bags (3) are separated from the slats (3) in the stowing operation and,
- the base of the bags (2) has a wedge-shape and the intermediate slats (3) also have a wedge-shape similar to that of the base of the bags (2) to ensure the contact between them and the transverse tension in the curtain (1),
so that said longitudinal tensioning means aided by tension in the intermediate slats (3) against the base of the bags (2) simultaneously ensure the tension of the curtain (1) in a longitudinal and transverse direction.

2. Sunshade for vehicle roofs having a transparent element according to claim 1, **characterized in that** the mouth of the bags (2) has two lateral flexible lips (2.1) with a tendency to be curved and thus to keep open the bag (2).

3. Sunshade for vehicle roofs having a transparent element according to claim 2, **characterized in that** the length of the lips (2.1) of the first bag (2) is different from the length of the lips (2.1) of the remaining bags (2).

4. Sunshade for vehicle roofs having a large transparent element according to claim 3, **characterized in that** the length of the lips (2.1) of the second bag (2) is less than the length of the lips (2.1) of the first bag (2).

5. Sunshade for vehicle roofs having a transparent element according to claim 1, **characterized in that** curved plates (5) are provided by way of a selector at the outlet of the reel (8), immediately in front of the intermediate slats (3), meant to push the flexible lips (2.1) and therefore the mouth of the bag (2) against the curtain (1) so that the latter passes under the intermediate slats (3) other than the first intermediate slat (3) immediately adjacent to the leading slat (4).

6. Sunshade for vehicle roofs having a transparent element according to claim 5, **characterized in that** there are two intermediate slats (3).

7. Sunshade for vehicle roofs having a transparent element according to claim 5, **characterized in that** the selector (5) acts on the flexible lip (2.1) according to its separation from the central axis of the curtain (1).

8. Sunshade for vehicle roofs having a transparent element according to claim 5, **characterized in that** lips (2.1) of the first bag (2) are straight in correspondence with the side of the intermediate slat (3) it collects, which corresponds to the side of the intermediate slat (3) that touches the base of the bag (2), and the lips (2.1) of the next bag (2) are curved in correspondence with the side of the intermediate slat (3) it collects, which corresponds to the side of the intermediate slat (3) that touches the base of the bag (2), where the lips (2.1) of both bags (2) are pushed against the curtain (1) as they pass the selector (5).

9. Sunshade for vehicle roofs having a transparent element according to claim 5 **characterized in that** the lips (2.1) of the first bag (2) are curved in correspondence with the side of the intermediate slat (3) it collects, which corresponds to the side of the intermediate slat (3) that touches the base of the bag (2), and the lips (2.1) of the next bag (2) are straight in correspondence with the side of the intermediate slat (3) it collects, which corresponds to the side of the intermediate slat (3) that touches the base of the bag (2), where the lips (2.1) of both bags (2) are pushed against the curtain (1) as they pass the selector (5).

10. Sunshade for vehicle roofs having a transparent element according to claim 6, **characterized in that** there is no space between the selector (5) and the rear intermediate slat (3) in a stowed position to prevent the bag (2) pushed by the selector (5) against the curtain (1), from moving up.

11. Sunshade for vehicle roofs having a transparent element according to claim 6, **characterized in that** there is enough free space between the two intermediate slats (3) in their stowed position to allow the bag (2) that leaves pushed against the curtain (1) to move upwards and collect the front intermediate slat (3).

12. Sunshade for vehicle roofs having a transparent element according to claim 5, **characterized in that** the selector (5) acts on the flexible lip (2.1) according to its separation from the central axis of the curtain (1).

13. Sunshade for vehicle roofs having a transparent element according to claim 1, **characterized in that** it is provided with tensioning elements in longitudinal direction consisting in a plate (9) which is attached to a runner (7) of a slat (3, 4) and locked in the runner (7) of another adjacent slat (3, 4) to ensure the tension of the curtain located between them when in the extended position.

14. Sunshade for vehicle roofs having a transparent element according to claim 13, **characterized in that** the plate (9) has a pivot (9.1) on one of its ends meant to facilitate the release of the plate (9) from the runner (7) in which it is locked.

15. Sunshade for vehicle roofs having a transparent element according to claim 13, **characterized in that** the locking of the plate (9) in the runner (7) takes place in a recess (7.1) of the runner (7).

16. Sunshade for vehicle roofs having a transparent element according to claim 14, **characterized in that** the plate (9) is released from the runner (7) in which it is locked by the pressure exerted by the pivot (9.1) against the surface of a guide (10) that is provided with a top plane that makes the plate (9) rise.

17. Sunshade for vehicle roofs having a transparent element according to claim 1, **characterized in that** the intermediate slats (3) and the leading drive slat (4) are made of metal or plastic.

18. Sunshade for vehicle roofs having a large transparent element according to claim 1, **characterized in that** the bags (2) are sewn to the curtain (1).

19. Sunshade for vehicle roofs having a transparent element according to claim 1, **characterized in that** the bags (2) are joined to the curtain (1) by an adhesive.

## Patentansprüche

1. Sonnenschutz für Fahrzeugdächer mit einem transparenten Element, der einen auf einer am hinteren Ende des Dachs angebrachten Rolle (8) aufgewickelten Vorhang (1), einen Führungsstab (4) und mindestens einen Zwischenstab (3) zur Versteifung des Vorhangs (1) aufweist, die mit Gleitstücken (7) entlang von auf beiden Seiten angeordneten Seitenschienen (6) gleiten, die sich über die gesamte Länge des Fahrzeugdachs erstrecken, wobei der Sonnenschutz mit Längsspannmitteln ausgestattet ist, wobei der Vorhang (1) auf ihrer Vorderseite offene Taschen (2) zur Aufnahme der Zwischenstäbe (3) während des Auszugs des Vorhangs (1) aufweist, **dadurch gekennzeichnet, dass**
- die Taschen (3) während des Verstauens von den Stäben (3) gelöst werden und
- der Grund der Taschen (3) eine Keilform aufweist und die Zwischenstäbe (3) ebenfalls eine Keilform ähnlich derjenigen des Grunds der Taschen (2) aufweisen, um den Kontakt zwischen diesen sowie die Querspannung des Vorhangs (1) zu sichern, so dass die Längsspanmittel unterstützt durch den Druck der Zwischenstäbe (3) gegen den Grund der Taschen (2) die Spannung des Vorhangs (1) in Längs- und Querrichtung sicherstellen.

2. Sonnenschutz für Fahrzeugdächer mit einem transparenten Element nach Anspruch 1, **dadurch gekennzeichnet, dass** die Öffnung der Taschen (2) zwei seitliche flexible Lippen (2.1) mit einer Tendenz zur Krümmung und damit zur Offenhaltung der Tasche (2) aufweist.

3. Sonnenschutz für Fahrzeugdächer mit einem transparenten Element nach Anspruch 2, **dadurch gekennzeichnet, dass** die Länge der Lippen (2.1) der ersten Tasche (2) sich von der Länge der Lippen (2.1) der übrigen Taschen (2) unterscheidet.

4. Sonnenschutz für Fahrzeugdächer mit einem langen transparenten Element nach Anspruch 3, **dadurch gekennzeichnet, dass** die Länge der Lippen (2.1) der zweiten Tasche (2) geringer als die Länge der Lippen (2.1) der ersten Tasche (2) ist.

5. Sonnenschutz für Fahrzeugdächer mit einem transparenten Element nach Anspruch 1, **dadurch gekennzeichnet, dass** gekrümmte Platten (5) als Selektoren am Austritt aus der Rolle (8) unmittelbar vor den Zwischenstäben (3) angebracht sind, um die flexiblen Lippen (2.1) und damit die Öffnung der Tasche (2) gegen den Vorhang (1) zu drücken, so dass diese unter den Zwischenstäben (3) mit Ausnahme des ersten Zwischenstabs (3) in unmittelbarer Nachbarschaft des Führungsstabs (4) entlang gleitet.

6. Sonnenschutz für Fahrzeugdächer mit einem transparenten Element nach Anspruch 5, **dadurch gekennzeichnet, dass** zwei Zwischenstäbe (3) vorhanden sind.

7. Sonnenschutz für Fahrzeugdächer mit einem transparenten Element nach Anspruch 5, **dadurch gekennzeichnet, dass** der Selektor (5) auf die flexible Lippe (2.1) entsprechend ihrem Abstand von der Mittelachse des Vorhangs (1) drückt.

8. Sonnenschutz für Fahrzeugdächer mit einem transparenten Element nach Anspruch 5, **dadurch gekennzeichnet, dass** die Lippen (2.1) der ersten Tasche (2) gerade sind entsprechend der Seite des aufgenommenen Zwischenstabs (3), die der Seite des Zwischenstabs (3) entspricht, die am Grund der Tasche (2) anliegt, und dass die Lippen (2.1) der nächsten Tasche (2) entsprechend der Seite des aufgenommenen Zwischenstabs (3) gekrümmt sind, die der Seite des Zwischenstabs (3) entspricht, die am Grund der Tasche (2) anliegt, wobei die Lippen (2.1) beider Taschen (2) während ihres Durchlaufs unter dem Selektor (5) gegen den Vorhang (1) gedrückt werden.

9. Sonnenschutz für Fahrzeugdächer mit einem transparenten Element nach Anspruch 5, **dadurch gekennzeichnet, dass** die Lippen (2.1) der ersten Tasche (2) gekrümmt sind entsprechend der Seite des aufgenommenen Zwischenstabs (3), die der Seite des Zwischenstabs (3) entspricht, die am Grund der Tasche (2) anliegt, und dass die Lippen (2.1) der nächsten Tasche (2) entsprechend der Seite des aufgenommenen Zwischenstabs (3) gerade sind, die der Seite des Zwischenstabs (3) entspricht, die am Grund der Tasche (2) anliegt, wobei die Lippen (2.1) beider Taschen (2) während ihres Durchlaufs unter dem Selektor (5) gegen den Vorhang (1) gedrückt werden.

10. Sonnenschutz für Fahrzeugdächer mit einem transparenten Element nach Anspruch 6, **dadurch gekennzeichnet, dass** zwischen dem Selektor (5) und dem hinteren Zwischenstab (3) in einer verstauten Stellung kein Raum vorhanden ist, um so zu verhindern, dass sich die gegen den Vorhang gedrückte Öffnung aufrichtet.

11. Sonnenschutz für Fahrzeugdächer mit einem transparenten Element nach Anspruch 6, **dadurch gekennzeichnet, dass** zwischen den beiden Zwischenstäben (3) in einer verstauten Stellung ausreichend freier Raum vorhanden ist, so dass die gegen den Vorhang (1) gedrückte Tasche (2) sich aufrichten und den unmittelbar davor liegenden Zwischenstab (3) aufnehmen kann.

12. Sonnenschutz für Fahrzeugdächer mit einem transparenten Element nach Anspruch 5, **dadurch gekennzeichnet, dass** der Selektor (5) auf die flexiblen Lippen (2.1) entsprechend ihrem Abstand von der Mittelachse des Vorhangs (1) wirkt.

13. Sonnenschutz für Fahrzeugdächer mit einem transparenten Element nach Anspruch 1, **dadurch gekennzeichnet, dass** dieser mit Spannelementen in Längsrichtung versehen ist, die aus einer an einem Gleitstück (7) eines Stabs (3, 4) befestigten Platte (9) bestehen, die im Gleitstück (7) eines weiteren benachbarten Stabs (3, 4) verankert ist, um die Spannung des Vorhangs zwischen denselben in der ausgefahrenen Stellung zu sichern.

14. Sonnenschutz für Fahrzeugdächer mit einem transparenten Element nach Anspruch 13, **dadurch gekennzeichnet, dass** die Platte (9) an einem ihrer Enden mit einem Stift (9.1) versehen ist zur Freigabe der Platte (9) aus dem Gleitstück (7), in welchem diese verriegelt ist.

15. Sonnenschutz für Fahrzeugdächer mit einem transparenten Element nach Anspruch 13, **dadurch gekennzeichnet, dass** die Verriegelung der Platte (9) im Gleitstück (7) in einer Aussparung (7.1) des Gleitstücks (7) erfolgt.

16. Sonnenschutz für Fahrzeugdächer mit einem transparenten Element nach Anspruch 14, **dadurch gekennzeichnet, dass** die in dem Gleitstück (7) verriegelte Platte (9) durch den auf den Stift (9.1) ausgeübten Druck gegen die Fläche einer mit einer Oberkante zum Anheben der Platte (9) versehenen Führung (10) freigegeben wird.

17. Sonnenschutz für Fahrzeugdächer mit einem transparenten Element nach Anspruch 1, **dadurch gekennzeichnet, dass** die Zwischenstäbe (3) und der Führungsstab (4) aus Metall oder Kunststoff hergestellt sind.

18. Sonnenschutz für Fahrzeugdächer mit einem langen transparenten Element nach Anspruch 1, **dadurch gekennzeichnet, dass** die Taschen (2) auf den Vorhang (1) aufgenäht sind.

19. Sonnenschutz für Fahrzeugdächer mit einem transparenten Element nach Anspruch 1, **dadurch gekennzeichnet, dass** die Taschen (2) am Vorhang (1) mit einem Klebemittel befestigt sind.

## Revendications

1. Parasoleil pour toits de véhicule ayant un élément transparent, comprenant un rideau (1) qui est enroulé sur une bobine (8) placé sur la partie arrière du toit, une latte d'attaque de commande (4) et au moins une latte intermédiaire (3) pour fournir de la rigidité au rideau (1), qui glissent au moyen de galets (7) le long de rails latéraux (6) placés de chaque côté et s'étendant longitudinalement le long de toute la longueur du toit de véhicule, dans lequel le parasoleil est pourvu de moyens de tension longitudinaux, ledit rideau (1) possède des poches (2) ouvertes par leur côté avant pour recevoir les lattes intermédiaires (3) lors de l'opération de déploiement du rideau (1) **caractérisé en ce que**
- les poches (3) sont séparées des lattes (3) lors de l'opération d'arrimage et,
- la base des poches (2) possède une forme de coin et les lattes intermédiaires (3) ont également une forme de coin similaire à celle de la base des poches (2) pour assurer le contact entre elles et la tension transversale dans le rideau (1),
de manière que lesdits moyens de tension longitudinaux assistés par les lattes intermédiaires (3) contre la base des poches (2) assurent simultanément la tension du rideau (1) dans une direction longitudinale et transversale.

2. Parasoleil pour toits de véhicule ayant un élément transparent selon la revendication 1, **caractérisé en ce que** l'embouchure des poches (2) a deux lèvres flexibles latérales (2.1) ayant tendance à se courber et de la sorte à maintenir ouvert le poche (2).

3. Parasoleil pour toits de véhicule ayant un élément transparent selon la revendication 2, **caractérisé en ce que** la longueur des lèvres (2.1) de la première poche (2) est différente de la longueur des lèvres (2.1) du reste des poches (2).

4. Parasoleil pour toits de véhicule ayant un grand élément transparent selon la revendication 3, **caractérisé en ce que** la longueur des lèvres (2.1) de la seconde poche e (2) est inférieure à la longueur des lèvres (2.1) de la première poche (2).

5. Parasoleil pour toits de véhicule ayant un élément transparent selon la revendication 1, **caractérisé en ce que** des plaques courbées (5) sont prévues par le biais d'un sélecteur à la sortie de la bobine (8), immédiatement en face des lattes intermédiaires (3), destinées à pousser les lèvres flexibles (2.1) et en conséquence l'embouchure de la poche (2) contre le rideau (1) afin que ce dernier passe sous les lattes intermédiaires (3) différentes de la première latte intermédiaire (3) immédiatement attenante à la latte d'attaque (4).

6. Parasoleil pour toits de véhicule ayant un élément transparent selon la revendication 5, **caractérisé en ce qu'**il y a deux lattes intermédiaires (3).

7. Parasoleil pour toits de véhicule ayant un élément transparent selon la revendication 5, **caractérisé en ce que** le sélecteur (5) agit sur la lèvre flexible (2.1) selon sa séparation de l'axe central du rideau (1).

8. Parasoleil pour toits de véhicule ayant un élément transparent selon la revendication 5, **caractérisé en ce que** les lèvres (2.1) de la première poche (2) sont droites en correspondance avec le côté de la latte intermédiaire (3) qu'il recueille, qui correspond au côté de la latte intermédiaire (3) qui touche la base de la poche (2), et les lèvres (2.1) de la poche suivante (2) sont courbées en correspondance avec le côté de la latte intermédiaire (3) qu'il recueille, qui correspond au côté de la poche intermédiaire (3) qui touche la base de la poche (2), où les lèvres (2.1) des deux poches (2) sont poussées contre le rideau (1) lorsqu'elles passent le sélecteur (5).

9. Parasoleil pour toits de véhicule ayant un élément transparent selon la revendication 5, **caractérisé en ce que** les lèvres (2.1) de la première poche (2) sont courbées en correspondance avec le côté de la latte intermédiaire (3) qu'il recueille, qui correspond au côté de la latte intermédiaire (3) qui touche la base de la poche (2), et les lèvres (2.1) de la poche suivant (2) sont droites en correspondance avec le côté de la latte intermédiaire (3) qu'il recueille, qui correspond au côté de la poche intermédiaire (3) qui touche la base de la poche (2), où les lèvres (2.1) des deux poches (2) sont poussées contre le rideau (1) lorsqu'elles passent le sélecteur (5).

10. Parasoleil pour toits de véhicule ayant un élément transparent selon la revendication 6, **caractérisé en ce qu'**il n'y a pas d'espace entre le sélecteur (5) et la latte intermédiaire arrière (3) dans une position arrimée pour éviter que la poche (2) poussée par le sélecteur (5) contre le rideau (1), se déplace vers le haut.

11. Parasoleil pour toits de véhicule ayant un élément transparent selon la revendication 6, **caractérisé en ce qu'**il y suffisamment d'espace libre entre les deux lattes intermédiaires (3) dans leur position arrimée pour permettre que la poche (2) qui sort poussée contre le rideau (1) se déplace vers le haut et recueille la latte intermédiaire (3).

12. Parasoleil pour toits de véhicule ayant un élément transparent selon la revendication 5, **caractérisé en ce que** le sélecteur (5) agit sur la lèvre flexible (2.1) selon sa séparation de l'axe central du rideau (1).

13. Parasoleil pour toits de véhicule ayant un élément transparent selon la revendication 1, **caractérisé en ce qu'**il est pourvu d'élément de tension dans la direction longitudinale consistant en une plaque (9) qui est fixée à un galet (7) d'une latte (3, 4) et verrouillée dans le galet (7) d'une autre latte attenante (3,4) pour assurer la tension du rideau situé entre elles lorsque qu'il est dans une position étendue.

14. Parasoleil pour toits de véhicule ayant un élément transparent selon la revendication 3, **caractérisé en ce que** la plaque (9) a un pivot (9.1) à une de ses extrémités destiné à faciliter la libération de la plaque (9) du galet (7) dans lequel elle est verrouillée.

15. Parasoleil pour toits de véhicule ayant un élément transparent selon la revendication 13, **caractérisé en ce que** le verrouillage de la plaque (9) dans le galet (7) a lieu dans l'évidemment (7.1) du galet (7).

16. Parasoleil pour toits de véhicule ayant un élément transparent selon la revendication 4, **caractérisé en ce que** la plaque (9) est libérée du galet (7) dans lequel elle est verrouillée par la pression exercée par le pivot (9.1) contre la surface d'un guide (10) qui est pourvu d'un plan supérieur qui fait que la plaque s'élève.

17. Parasoleil pour toits de véhicule ayant un élément transparent selon la revendication 1, **caractérisé en ce que** les lattes intermédiaires (3) et la latte de commande d'attaque (4) sont faites en métal ou en plastique.

18. Parasoleil pour toits de véhicule ayant un grand élément transparent selon la revendication 1, **caractérisé en ce que** les poches (2) sont cousues au rideau (1).

19. Parasoleil pour toits de véhicule ayant un élément transparent selon la revendication 1, **caractérisé en ce que** les poches (2) sont unies au rideau (1) par un adhésif.
